# EUROPEAN PATENT SPECIFICATION

(11) **EP 0 672 616 B1**
(45) Date of publication and mention of the grant of the patent: **10.12.1997**
(21) Application number: 95301690.4
(22) Date of filing: 14.03.1995
(51) Int. Cl.: B67D 1/00

(54) **Multi-flavour post-mix type drink dispenser**
Postmixgetränkespender für verschiedene Aromen
Distributeur de boissons à plusieurs arômes du type à mélange ultérieur

(30) Priority: 18.03.1994 JP 48043/94; 16.12.1994 JP 312897/94
(43) Date of publication of application: 20.09.1995
(73) Proprietor: FUJI ELECTRIC CO. LTD., Kawasaki 210 (JP)
(72) Inventor: Hashimoto, Masami, c/o Fuji Electric Co. Ltd., Kawasaki 210 (JP); Tahibana, Manabu, c/o Fuji Electric Co. Ltd., Kawasaki 210 (JP)
(74) Representative: Bridge-Butler, Alan James

(56) References cited:
- WO-A-90/11961
- WO-A-91/17948
- DE-A- 3 709 161
- GB-A- 792 911
- US-A- 2 921 605
- US-A- 4 932 564

## Description

The present invention relates to a multi-flavour post-mix type drink dispenser according to the preamble of claim 1. One such dispenser is disclosed in WO 90 11 961 A.

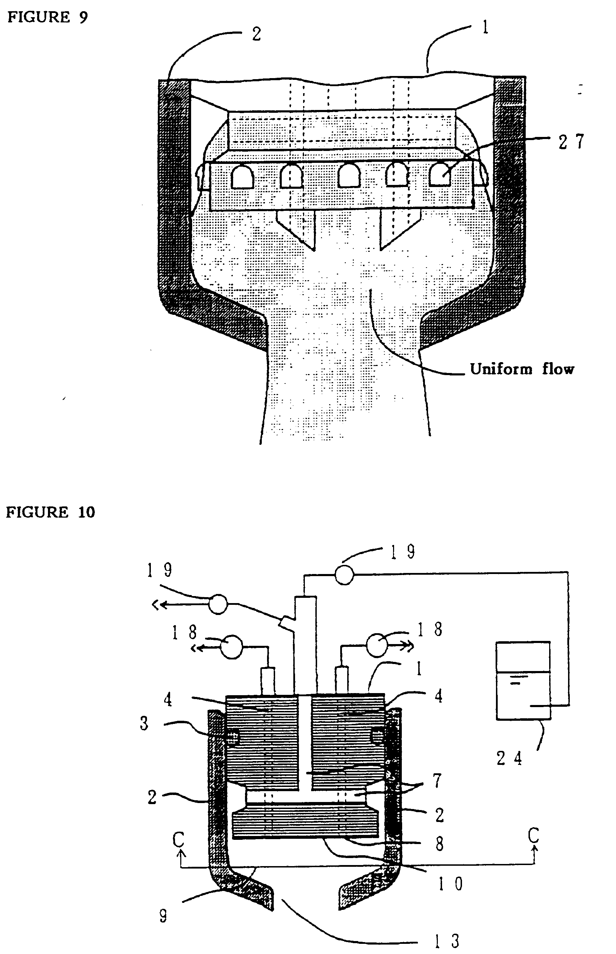

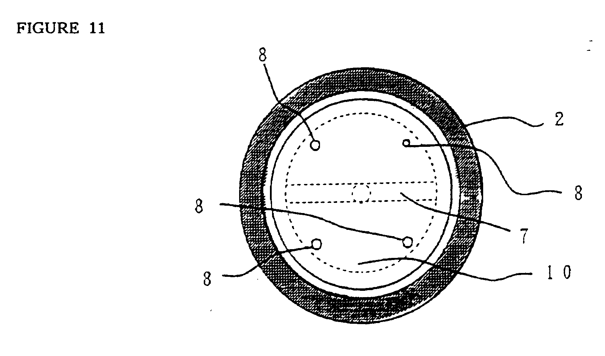

Figure 10 shows a sectional view of another type of a conventional multi-flavour post-mix type drink dispenser, and Figure 11 is a transverse sectional view taken along line C-C of Figure 10. In these Figures, a dispenser head 1 has a nozzle tube 2 surrounding it, and sealed to it by means of O-rings 3.

The dispenser head 1 has four paraxially extending jet pipes 4 to supply, for example, the respective beverage concentrates of four different flavoured drinks, and the lower end of each of the jet pipes 4 opens at a respective concentrate jet port 8 on the lower face 10 of the dispenser head 1.

The jet pipes 4 are each located on the circumference of a circle as viewed from the top of the dispenser head 1. An axial diluent liquid passage 7 extends downwards into the dispenser head 1, and radially branches in the form of a "T" before reaching the bottom face 10 of the dispenser head 1 to communicate with a circumferential groove formed in the dispenser head 1 and facing the inner surface of the nozzle tube 2.

From the upper face of the dispenser head 1, the jet pipes 4 are each connected to a respective reservoir (not shown) holding a concentrate of a different flavour via a respective concentrate solenoid valve 18.

The diluent liquid passage 7 is connected to branch pipes for the supply of diluent liquids such as carbonated water and cold water, each branch pipe being connected to a respective diluent liquid container 24 via a respective diluent solenoid valve 19.

In this configuration, one of the concentrates selected according to an instruction from a control system (not shown) and flows out from its respective concentrate jet port 8 into a mixing section 9 within the nozzle tube 2 when the concentrate solenoid valve 18 associated with that concentrate is opened. Simultaneously, a selected diluent liquid is supplied through the diluent liquid passage 7 when the respective diluent solenoid valve 19 associated with that diluent is opened, and the diluent liquid impinges against the internal wall of the nozzle tube 2, and then passes axially downwards (as seen in Figure 10) through the annular gap between the internal surface of the nozzle tube 2 and the exterior surface of the dispenser head 1 into the mixing section 9 of the nozzle tube 2.

The concentrate and the diluent liquid are mixed in the mixing section 9 of the nozzle tube 2, and then exit through an opening 13 at the lower end of the nozzle tube 2.

Reference number 24 designates a carbonator which is supplied with water and carbon dioxide from respective water and carbon dioxide supply ports (not shown), the water and carbon dioxide being mixed in order to generate carbonated water, which can then be supplied as a diluent to the dispenser head 1 via diluent solenoid valve 19.

In conventional multi-flavour post-mix type drink dispensers, since various combinations are selected from a plurality of concentrates and a plurality of diluent liquids for mixing, part of a first selected concentrate may adhere to the bottom of the dispenser head due to surface tension and remain there after a dispensing operation has been completed. Such a residue of a first concentrate may be mixed into, and thus contaminate, a subsequently dispensed beverage mixed from a diluent and a second selected concentrate.

It is thus an objective of this invention to provide a multi-flavour post-mix type drink dispenser that prevents a first selected concentrate or diluent liquid from mixing into a second selected concentrate or diluent liquid.

According to the invention, a multi-flavour post-mix type drink dispenser comprises a dispenser head having a plurality of jet pipes that supply respective types of concentrates of different flavours, and a supply port for a diluent liquid to dilute the concentrates, and a nozzle tube installed on the outer circumference of the dispenser head and having a mixing section for mixing a concentrate with the diluent liquid and an opening for jetting out the mixture downward, wherein jet nozzles of each of the jet pipes protrude from the lower face of the dispenser head so that they can be used as a respective jet nozzle for each concentrate, the end surfaces of the concentrate jet nozzles being inclined and the concentrate jet nozzles being located on the circumference of a circle characterised in that the lower part of the inclined end surface of each jet nozzle is closer to the centre of the dispenser head and the diameter of the circumscribing circle of the openings of the jet nozzles is smaller than the inner diameter of the opening in the lower section of the nozzle tube installed around the dispenser head.

In an advantageous embodiment of the invention, the dispenser head has a rib protruding downwardly from the outer circumference of its lower face.

In yet another embodiment, the head has a plurality of protruding embossments that extend radially from the side of the head, and terminate above the lowermost surface of the dispenser head.

Preferably, a passage to supply said diluent liquid is selectively connectable to a carbon dioxide passage via a check valve.

Most preferably, a safety valve is connected to the carbon dioxide passage, and is operable manually or automatically to supply a quantity of carbon monoxide gas as a flushing gas after each dispensing operation.

Since the multi-flavour post-mix type drink dispenser of this invention has respective nozzles for different concentrates protruding from the lower face of head and the tip face of the nozzle is inclined, almost all the remaining concentrate adhering to the jet nozzle end surfaces drops off before a different concentrate is subsequently selected.

Furthermore, a protruding rib installed on the lower face of the head prevents any remaining diluent liquid from flowing onto the lower face.

Since the diluent liquid passage is supplied with carbon dioxide after each drink is served and the gas blows the remaining liquid away, there is no liquid remaining in the diluent liquid passage or the nozzle.

Embodiments of the present invention will now be described in detail with reference to the accompanying drawings, in which:
Figure 1 is an axial cross section of a first dispenser according to this invention.
Figure 2 is a section taken along line A-A of Figure 1.
Figure 3 is a cross section of a second dispenser according to this invention.
Figure 4 is a section taken along line B-B of Figure 3.
Figure 5 illustrates the flows of residual concentrate and diluent liquid in a dispenser according to this invention.
Figure 6 is a cross section of a third dispenser according to this invention.
Figure 7 is a diagram wherein the flow of diluent liquid is shown biased due to the absence of side ribs.
Figure 8 is a cross section of a fourth dispenser according to this invention.
Figure 9 is a diagram where side ribs allow the diluent liquid to flow uniformly.
Figure 10 is an axial cross section of a dispenser according to the prior art.
Figure 11 is a section taken along line C-C of Figure 10.

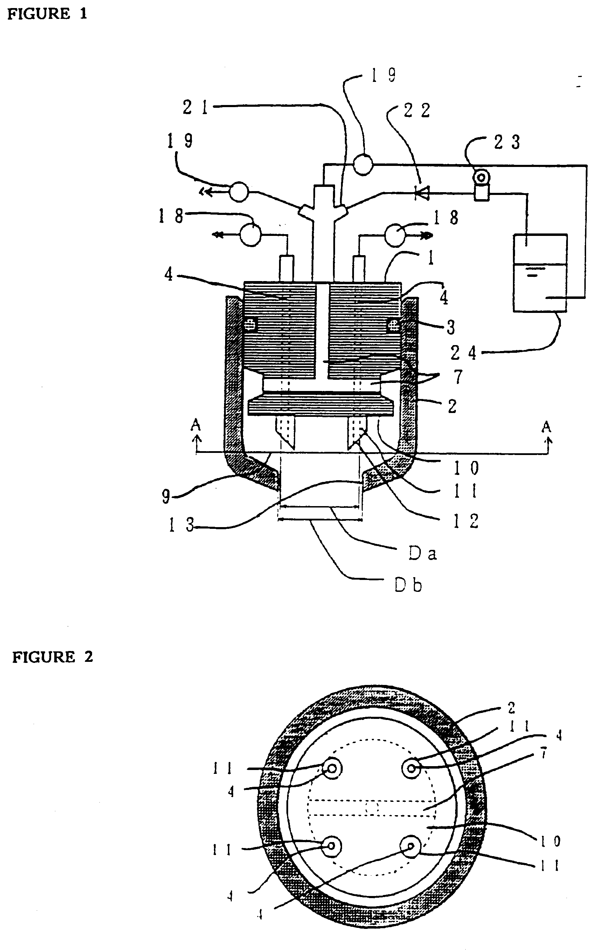

Referring now to the drawings, Figure 1 is a cross section of a first embodiment of this invention, and Figure 2 is a sectional view taken along line A-A of Figure 1. The elements with the same reference numbers as those in Figures 10 and 11 discussed above, which show cross-sectional views of a conventional multi-flavour post-mix type drink dispenser, have substantially the same functions as the corresponding elements in Figures 10 and 11.

In Figure 1, dispenser head 1 has jet pipes 4 for respective concentrates located on the circumference of a circle as viewed from the top of the dispenser head 1. Each jet pipe 4 ends in a jet nozzle 11 protruding from the lower face 10 of the dispenser head 1 and having an inclined end surface 12. The end surfaces 12 are inclined downwardly and radially inwardly, so that the lowest point on the end surface 12 is also closest to the centreline of the dispenser head 1.

The diameter Da of the circumscribing circle of the tip openings of the jet nozzles 11 is somewhat smaller than the diameter Db of the opening 13 in the lower part of the nozzle tube 2 installed around the dispenser head 1, thus ensuring that the lowermost parts of the end surfaces 12 of the jet pipes 4 are situated above the opening 13 in the nozzle tube 2.

A diluent liquid passage 7 extends axially then transversely through the dispenser head 1, and a nozzle tube 2 which is installed around the dispenser head 1 and sealed thereto by O-rings 3 has a mixing section 9 adjacent the lower face 10 of the dispenser head 1. An opening 13 in the lower part of the nozzle tube 2 allows the exit of the mixed liquids.

From the upper face of the dispenser head 1, the jet pipes 4 are each connected to a respective reservoir (not shown) for each of the concentrates of different flavours via a respective concentrate solenoid valve 18.

The diluent liquid passage 7 is connected to supplies of respective diluent liquids such as carbonated water and still water, each supply being controlled by a respective diluent solenoid valve 19. Such supplies are preferably led from respective diluent liquid containers (not shown).

Connected to the diluent liquid passage 7 is a carbon dioxide supply line 21, which is led from a carbonator 24 via a check valve 22 and a safety valve 23.

After each mixture is dispensed, the diluent liquid passage 7 is supplied with an amount of carbon dioxide from the carbonator 24 via the safety valve 23 and the check valve 22, the gas exiting from the diluent liquid passage 7 to blow away any residual liquid in the diluent liquid passage 7. The carbon dioxide supply may be controlled manually by operating the safety valve 23, or a valve control system may be provided which can sense the end of a dispensing operation and automatically supply a predetermined quantity of carbon dioxide gas to the diluent liquid passage 7 by opening the safety valve 23 for a set period.

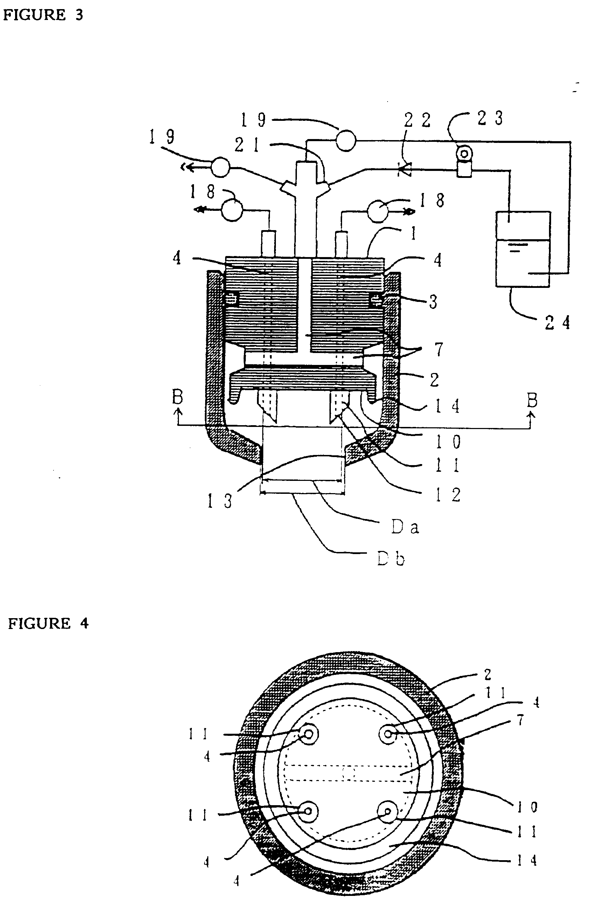

Figure 3 is a cross section of a second embodiment of this invention, and Figure 4 is a sectional view taken along line B-B of Figure 3. Figures 3 and 4 differ from Figures 1 and 2 in that the dispenser head 1 has a rib 14 protruding downwardly from the outer circumference of its lower face 10.

The rib 14 protruding downward from the lower face 10 of the dispenser head 1 prevents any residual diluent liquid from flowing onto the lower face 10 of the dispenser head 1 and remaining there, as this would necessitate the residual diluent liquid flowing up the interior face of the rib 14 against gravity.

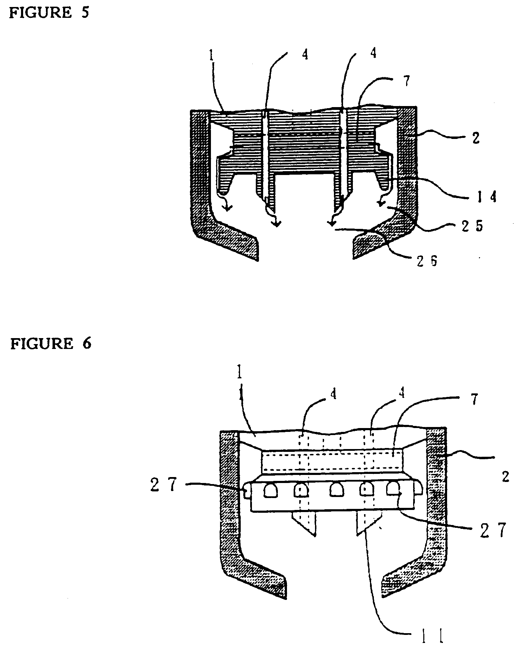

Figure 5 shows the flow paths of concentrate residue 26 and diluent liquid residue 25.

Figure 6 is a cross section of a third embodiment of this invention. The embodiment shown in Figure 6 differs from that of Figure 1 in that the dispenser head 1 has a plurality of radially protruding embossments 27 that extend outwardly from the dispenser head 1 into the annular space between the dispenser head 1 and the nozzle tube 2 below the groove formed round the dispenser head 1 where the diluent liquid exits from the diluent liquid passages 7. The embossments 27 do not extend axially downwards as far as the lowermost edge of the exterior surface of the dispenser head 1.

When a diluent liquid flows toward the mixing section 9 of the nozzle tube 2, these embossments 27 divide the flow of the diluent liquid at their top in such a way that the liquid uniformly flows between the adjacent embossments 27 along the side of the dispenser head 1. Part of the liquid swirls at the lower end of the embossments 27, and then flows underneath the embossments 27. The adjacent flows meet one another downstream of the embossments 27 and as a result, the diluent liquid flows down along the entire circumferential extent of the exterior surface of the dispenser head 1. Without the embossments 27, a rift in the flow of a diluent liquid flowing along the exterior surface of the dispenser head 1 may be extended by surface tension to bias the flow of the diluent liquid toward a certain circumferential region of the dispenser head 1. The embossments 27 prevent such a rift in the flow.

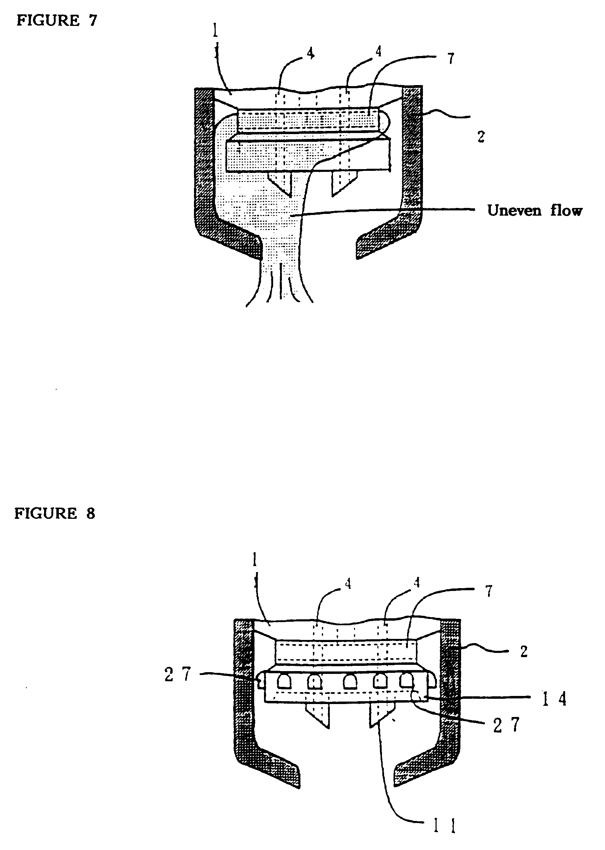

Figure 7 is a diagram illustrating an embodiment without the embossments 27 wherein a rift in the flow of the diluent liquid is extended to bias the flow toward a certain area of the side of the dispenser head 1.

Furthermore, since the axial length of the embossments 27 is limited so that they do not extend axially downwards as far as the lowermost edge of the exterior surface of the dispenser head 1, part of the diluent liquid flows underneath the embossments 27 and along the dispenser head 1 thereafter to be never divided again.

Figure 8 is a cross sectional view of a fourth embodiment of this invention, which differs from the embodiment of Figure 6 in that the dispenser head 1 has a rib 14 protruding downwardly from the outer circumference of its lower face 10.

Figure 9 is a diagram showing the action of the embossments 27 to allow the diluent liquid to uniformly flow all over the exterior surface of the dispenser head 1.

This invention thus prevents the concentrate from mixing into a subsequently selected concentrate, since because the respective jet nozzles for different concentrates protrude out of the plane of the lower face 10 of the dispenser head 1 and the end surfaces 12 of the jet nozzles are inclined, almost all the remaining concentrate adhering to the lower face of the jet nozzle drops off before a different concentrate is subsequently selected.

Furthermore, the protruding rib installed on the lower face of the dispenser head 1 prevents any remaining diluent liquid from flowing onto the lower face of the dispenser head 1.

Since the diluent liquid passage is supplied with carbon dioxide gas by operating the safety valve after the drink is served and the gas blows the remaining diluent liquid away, there is no liquid remaining in the diluent liquid passage or the nozzle. The inside of the apparatus is thus kept clean. Any concentrate or diluent liquid dripping out of the nozzle is caught in a waste liquid receiver (not shown), and discharged for cleaning when the concentrates are replenished.

## Claims

1. A multi-flavour post-mix type drink dispenser comprising a dispenser head (1) having a plurality of jet pipes (4) that supply respective types of concentrates of different flavours, and a supply port (7) for a diluent liquid to dilute the concentrates, and a nozzle tube (2) installed on the outer circumference of the dispenser head (1) and having a mixing section (9) for mixing a concentrate with the diluent liquid and an opening (13) for jetting out the mixture downward, wherein jet nozzles (11) of each of the jet pipes (4) protrude from the lower face (10) of the dispenser head (1) so that they can be used as a respective jet nozzle (11) for each concentrate, the end surfaces (12) of the concentrate jet nozzles (11) being inclined and the concentrate jet nozzles (11) being located on the circumference of a circle characterised in that the lower part of the inclined end surface (12) of each jet nozzle (11) is closer to the centre of the dispenser head (1) and the diameter (Da) of the circumscribing circle of the openings of the jet nozzles (11) is smaller than the inner diameter (Db) of the opening (13) in the lower section of the nozzle tube (2) installed around the dispenser head (1).

2. A multi-flavour post-mix type drink dispenser according to Claim 1, characterised in that the dispenser head (1) has a rib (14) situated below the diluent outlet and protruding downward on the outer circumference of its lower face (10).

3. A multi-flavour post-mix type drink dispenser according to Claim 1, characterised in that the dispenser head (1) has a plurality of protruding embossments (27) that extend radially from the dispenser head (1) at a point downstream of the diluent liquid supply port (7), and terminate at points spaced axially above the lower surface (10) of the dispenser head (1).

4. A multi-flavour post-mix type drink dispenser according to Claim 1, characterised in that a passage (7) for supplying said diluent liquid is connected to a carbon dioxide passage (21) via a check valve (22).

5. A multi-flavour post-mix type drink dispenser according to Claim 4, wherein a safety valve (23) is connected to the carbon dioxide passage (21).

6. A multi-flavour post-mix type drink dispenser according to Claim 5, wherein the safety valve (23) is operated by manual or automatic means to supply a quantity of carbon dioxide gas to the passage (7) after each dispensing operation.

## Patentansprüche

1. Postmixgetränkespender für verschiedene Aromen mit einen Spenderkopf (1), der eine Vielzahl von Strahlrohren (4) aufweist, die entsprechende Arten von Konzentraten verschiedener Aromen liefern, sowie eine Versorgungsöffnung (7) für eine Verdünnungsflüssigkeit, um die Konzentrate zu verdünnen, und eine Düsenröhre (2), die am äußeren Umfang des Spenderkopfes (1) angeordnet ist, und wobei dieser einen Mischungsbereich (9) zum Mischen eines Konzentrats mit der Verdünnungsflüssigkeit aufweist sowie eine Öffnung (13) zum Ausstoßen der Mischung nach unten, wobei Strahldüsen (11) von jedem dieser Strahlrohre(4) aus der unteren Fläche (10) des Spenderkopfes (1) vorstehen, so daß sie als eine entsprechende Strahldüse (11) für das jeweilige Konzentrat verwendet werden können, wobei die Endflächen (12) der Konzentrat-Strahldüsen (11) geneigt sind und wobei die Konzentrat-Strahldüsen (11) auf dem Kreisumfang angeordnet sind,
dadurch gekennzeichnet,
daß der untere Teil der geneigten Endfläche (12) jeder Strahldüse (11) näher an dem Mittelpunkt des Spenderkopfes (1) und der Durchmesser (Da) des Umfangkreises der Öffnungen der Strahldüsen (11) kleiner ist als der Innendurchmesser (Db) der Öffnung (13) in dem unteren Abschnitt der Düsenröhre (2) ist, die um den Spenderkopf (1) herum angeordnet ist.

2. Postmixgetränkespender für verschiedene Aromen nach Anspruch 1,
dadurch gekennzeichnet,
daß der Spenderkopf (1) eine Rippe (14) aufweist, die unterhalb der Verdünnungsmittelöffnung liegt und nach unten zu dem Außenumfang dessen unteren Fläche (10) hervorsteht.

3. Postmixgetränkespender für verschiedene Aromen nach Anspruch 1,
dadurch gekennzeichnet,
daß der Spenderkopf (1) eine Vielzahl vorstehender Erhebungen (27) aufweist, die radial um den Spenderkopf (1) an einem Punkt abwärts der Versorgungsöffnung (7) für das Verdünnungsmittel angeordnet sind und an Punkten enden, die axial über der unteren Fläche (10) des Spenderkopfes (1) angeordnet sind.

4. Postmixgetränkespender für verschiedene Aromen nach Anspruch 1,
dadurch gekennzeichnet,
daß eine Leitung (7) zur Lieferung der Verdünnungsflüssigkeit mit einer Kohlendioxid-Leitung (21) über ein Regulierventil (22) verbunden ist.

5. Postmixgetränkespender für verschiedene Aromen nach Anspruch 4, wobei ein Sicherungsventil (23) mit der Kohlendioxid-Leitung (21) verbunden ist.

6. Postmixgetränkespender für verschiedene Aromen nach Anspruch 5, wobei das Sicherungsventil (23) manuell oder mittels automatischer Mittel bedient wird, um eine Menge an Kohlendioxidgas zu der Leitung (7) nach jedem Spendevorgang zu liefern.

## Revendications

1. Distributeur de boissons à plusieurs arômes du type à mélange ultérieur, comprenant une tête de distributeur (1) ayant une pluralité de tubes de projection (4) qui fournissent des types respectifs de concentrés de différents arômes, et un orifice d'alimentation (7) pour un liquide diluant afin de diluer les concentrés, et un tube de buse (2) installé sur la circonférence extérieure de la tête de distributeur (1) et ayant une section de mélange (9) pour mélanger un concentré avec le liquide diluant, et une ouverture (13) pour projeter le mélange vers le bas, dans lequel des ajutages (11) de chacun des tubes de projection (4) font saillie par rapport à la surface inférieure (10) de la tête de distributeur (1), de sorte qu'ils peuvent être utilisés comme un ajutage respectif (11) pour chaque concentré, les surfaces d'extrémités (12) des ajutages (11) de concentré étant inclinées, et les ajutages (11) de concentré étant situées sur la circonférence d'un cercle, caractérisé en ce que la partie inférieure de la surface d'extrémité inclinée (12) de chaque ajutage (11) est plus près du centre de la tête de distributeur (1), et que le diamètre (Da) du cercle circonscrit aux ouvertures des ajutages (11) est plus petit que le diamètre intérieur (Db) de l'ouverture (13) dans la section inférieure du tube de buse (2) installé autour du la tête de distributeur (1).

2. Distributeur de boissons à plusieurs arômes du type à mélange ultérieur selon la revendication 1, caractérisé en ce que la tête de distributeur (1) a une nervure (14) située en-dessous de la sortie du diluant et faisant saillie vers le bas sur la circonférence extérieure de sa face inférieure (10).

3. Distributeur de boissons à plusieurs arômes du type à mélange ultérieur selon la revendication 1, caractérisé en ce que la tête de distributeur (1) a une pluralité de bossages en saillie (27) qui s'étendent radialement à partir de la tête de distributeur (1) en un point en aval de l'orifice d'alimentation (7) en liquide diluant, et qui se terminent en des points espacés axialement au-dessus de la surface inférieure (10) de la tête de distributeur (1).

4. Distributeur de boissons à plusieurs arômes du type à mélange ultérieur selon la revendication 1, caractérisé en ce qu'un passage (7) pour fournir ledit liquide diluant est connecté à un passage (21) de dioxyde de carbone par l'intermédiaire d'une soupape d'arrêt (22).

5. Distributeur de boissons à plusieurs arômes du type à mélange ultérieur selon la revendication 4, dans lequel une soupape de sûreté (23) est connectée au passage (21) de dioxyde de carbone.

6. Distributeur de boissons à plusieurs arômes du type à mélange ultérieur selon la revendication 5, dans lequel la soupape de sûreté (23) est manoeuvrée par des moyens manuels ou automatiques pour fournir une quantité de dioxyde de carbone gazeux au passage (7) après chaque opération de distribution.
